# EUROPÄISCHE PATENTSCHRIFT

(11) **EP 1 926 546 B1**
(45) Veröffentlichungstag und Bekanntmachung des Hinweises auf die Patenterteilung: **05.01.2011**
(21) Anmeldenummer: 06743134.6
(22) Anmeldetag: 08.06.2006
(51) Int. Cl.: B01D 63/02

(54) **HOHLFASERMEMBRANTRENNVORRICHTUNG**
HOLLOW FIBRE MEMBRANE SEPARATION DEVICE
DISPOSITIF DE SÉPARATION PAR MEMBRANE À FIBRES CREUSES

(30) Priorität: 12.09.2005 DE 102005043321
(43) Veröffentlichungstag der Anmeldung: 04.06.2008
(73) Patentinhaber: Fresenius Medical Care Deutschland GmbH, 61352 Bad Homburg v.d.H. (DE)
(72) Erfinder: WITTHAUS, Friedrich, 66640 Namborn (DE); BREITH, Gerhard, 66606 St.Wendel (DE)
(74) Vertreter: Laufhütte, Dieter
(86) Internationale Anmeldenummer: PCT/EP2006/005507
(87) Internationale Veröffentlichungsnummer: WO 2007/031121

(56) Entgegenhaltungen:
- EP-A- 0 706 818
- EP-A- 0 844 015
- EP-A- 1 323 462
- GB-A- 1 537 414
- US-A- 4 686 039

## Beschreibung

Die Erfindung betrifft eine Hohlfasermembrantrennvorrichtung nach dem Oberbegriff des Anspruchs 1.

Derartige Hohlfasermembrantrennvorrichtungen sind beispielsweise aus der EP-A-0 844 015 bekannt. Bei diesen Hohlfasermembrantrennvorrichtungen sind zwei Strömungsräume gebildet, von denen ein erster Raum durch die Kapillarröhren-Durchgänge eines an seinen Enden in eine Vergußmasse eingegossenen Hohlfaserbündels und ein zweiter Raum durch ein das Faserbündel einfassendes Gehäuse gebildet ist. Der erste Raum ist durch auf die Vergußmassen aufgesetzte Kappen mit über die Umfangsbereiche der Vergußmassen verlaufenden Dichtungen abgedichtet. In das Gehäuse ist das jeweilige Hohlfaserbündel eingezogen. An den jeweiligen Enden seines Mantels weist das Gehäuse durch frei auslaufende, axiale Kerben oder Einschnitte gebildete zahn- oder zinnenartige Vorsprünge auf. Deren äußere Bereiche sind in die Vergußmassen eingebunden, so dass die freien inneren Bereiche der Kerben oder Einschnitte Durchflußöffnungen für die Flüssigkeit bilden.

Da dass rohrabschnittförmige und vorzugsweise mit einem kreisrunden Querschnitt versehene Gehäuse aus einem Material mit elastischen Eigenschaften, beispielsweise Polycarbonat, besteht, sind durch die Kerben oder Einschnitte aus federnden Zungen bestehende kranzförmige Ränder gebildet, die von der Vergußmasse zumindest teilweise eingefaßt sind. Härtet die Vergußmasse zu Scheiben aus, können diese im wesentlichen spannungsfrei schrumpfen, wobei die federnden Zungen diesem Schrumpfen keinen nennenswerten Widerstand entgegensetzen. Hierdurch sind die durch die Vergußmassen gebildeten Scheiben fest mit den Enden des rohrförmigen Gehäuses verbunden, so dass sich sodann durch die beiden einander übergreifenden Kappen mit den entsprechenden Dichtungsmitteln die beiden Strömungsräume sicher voneinander trennen lassen.

Diese mit den zahn- oder zinnenartigen Vorsprüngen gebildeten Gehäuse weisen jedoch den Nachteil auf, dass sich bei der Herstellung der Hohlfasermembrantrennvorrichtung einzelne Hohlfasern oder Hohlfaserpakete durch die Zwischenräume der axial gerichteten Zinnen durchdrücken können. Die äußeren Hohlfasem bzw. Hohlfaserpakete können also in dem Zwischenraum zwischen dem zahn- oder zinnenartigen Vorsprüngen heraustreten. Dies ist beim Herstellverfahren störend.

Aufgabe der vorliegenden Erfindung ist es daher eine Hohlfasermembrantrennvorrichtung der gattungsgemäßen Art derart weiterzubilden, dass sie einfacher und störungsfrei herstellbar ist.

Die Lösung dieser Aufgabe liegt in einer neuen Formgebung des Gehäuses der Hohlfasermembrantrennvorrichtung nach der Kombination der Merkmale des Anspruchs 1. Ausgehend von einer Hohlfasermembrantrennvorrichtung der eingangs angegebenen Gattung weist das Gehäuse dieser Hohlfasermembrantrennvorrichtung zwischen den zahn- oder zinnenartigen Vorsprüngen von diesen ausgehende Fortsätze auf, die sich zum benachbarten zahn- oder zinnenartigen Vorsprung erstrecken.

Die Fortsätze zwischen den zahn- oder zinnenartigen Vorsprüngen bilden sozusagen Querverstrebungen, die ein Durchtreten der äußeren Hohlfasern des Hohlfaserbündels durch die Zwischenräume zwischen zwei benachbarten zahn- oder zinnenartigen Vorsprüngen verhindert. Diese Fortsätze gehen von einem zahn- oder zinnenartigen Vorsprung aus. In einer ersten Ausführungsform sind zweibenachbarte Zinnen durch die Fortsätze verbunden, wobei die Fortsätze eine derartige geometrische Ausgestaltung (z. B. wellen- oder zickzackförmig) haben, dass sie einer Änderung des Abstandes von zwei Zinnen bzw. deren Beweglichkeit nicht im Wege stehen. In einer zweiten Ausführungsform sind die Fortsätze nicht mit einem benachbarten Vorsprung verbunden. Beide Ausführungsformen gewährleisten die gewünschte Elastizität, die dazu dient, eine spannungsarme Verbindung mit dem schrumpfenden Vergußmaterial zu bilden.

Vorteilhafte Ausgestaltungen der Erfindung ergeben sich aus den sich an den Hauptanspruch anschließenden Unteransprüchen. Demnach sind die von den Vorsprüngen ausgehenden Fortsätze vorteilhaft als bogen- bzw. sichelförmige Haken ausgebildet. Diese sichelförmigen Haken bedingen eine noch bessere Verbindung mit dem die Vorsprünge umgebenden Vergußmaterial. Die Gefahr von Materialbruch wird weiter deutlich vermindert.

Gemäß einer besonders vorteilhaften Ausgestaltung der Erfindung sind über die Höhe eines zahn- oder zinnenartigen Vorsprunges von diesem ausgehend zu jeder Seite hin zwei Fortsätze verzweigt.

Das Gehäuse kann einstückig aus einem flexiblen Kunststoff spritzgegossen sein.

Weitere Merkmale, Einzelheiten und Vorteile der Erfindung ergeben sich aus einem in der Zeichnung dargestellten Ausführungsbeispiel. Es zeigen:
- Figur 1:: einen Längsschnitt durch eine Seite der erfindungsgemäßen Hohlfasermembrantrennvorrichtung,
- Figur 2:: ein Detail eines Endteils des Gehäuses der Hohlfasermem- brantrennvorrichtung,
- Figur 3:: ein Detail des Hohlfasermembrantrennvorrichtungsgehäuses und
- Figuren 4 und 5:: Darstellungen des Gehäuses der Hohlfasermembrantrennvor- richtung vor Einfüllen des Faserbündels und vor Montage der Kappen.

Die Hohlfasermembrantrennvorrichtung 10 besteht aus einem rohrabschnittförmigen Gehäuse 12 aus Kunststoff, beispielsweise Polycarbonat. In das Gehäuse ist ein Hohlfasermembranbündel eingebracht. Die Enden dieses Hohlfasermembranbündels 14 sind in einer beispielsweise aus PU bestehenden Vergußmasse 16 eingebettet, die nach ihrer Aushärtung scheibenförmig ist. Mittels der Vergußmasse 16 sind die Hohlfasern 14 mit dem Gehäuse 12 verbunden.

Auf das Gehäuse ist eine Kappe 18 aufgesetzt, die mittels einer Dichtung 20 abgedichtet ist.

Der genaue Aufbau und die Funktion derartiger Hohlfasermembrantrennvorrichtungen ist bereits in der EP-A-0 844 015 im Detail beschrieben, auf die hier verwiesen wird.

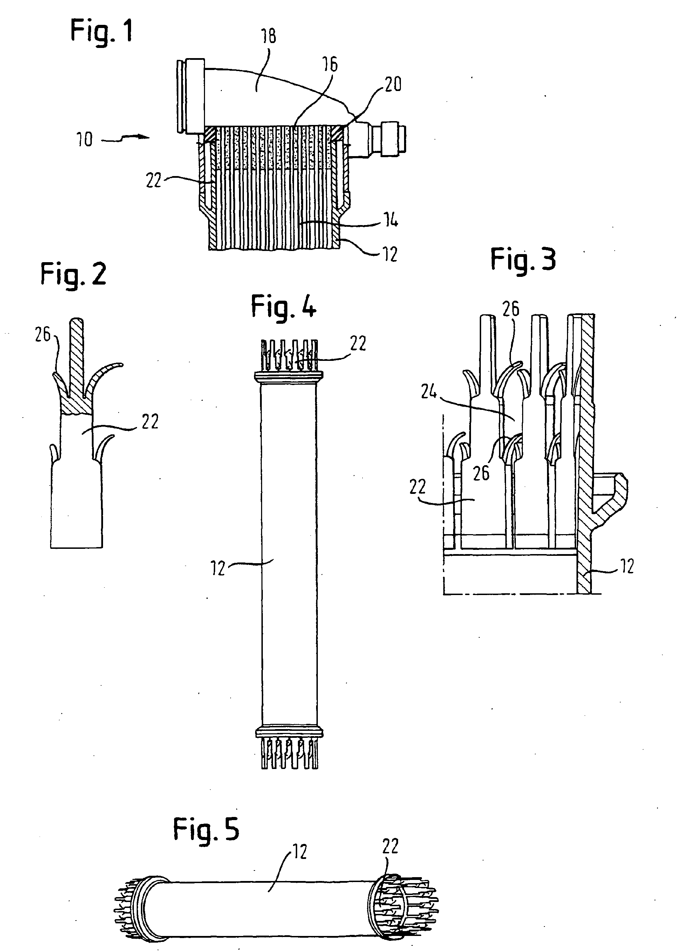

Das rohrabschnittförmige Gehäuse 12 weist an den jeweiligen Enden seines Mantels frei auslaufende, axiale Kerben oder Einschnitte auf, die zwischen zahn- oder zinnenartigen Vorsprüngen 22 gebildet sind (vgl. Figuren 1 bis 5).

Der zwischen den Zinnnen 22 bestehende Spalt 24 wird gemäß der vorliegenden Erfindung durch von den Vorsprüngen 22 abgehende Fortsätze 26 überbrückt. Wie insbesondere in den Figuren 2 und 3 zu sehen, sind diese Fortsätze als bogen- bzw. sichelförmige Haken ausgebildet, die die benachbarten zahn- oder zinnenartige Vorsprünge 22 nicht berühren. In der hier dargestellten Ausführungsform sind zwei übereinander angeordnete Fortsätze 26 auf jeder Seite des Vorsprungs 22 angeordnet. Aufgrund dieser Anordnung wird eine intensive Verbindung mit der Vergußmasse (vgl. Figur 1) erzielt. Aufgrund der beibehaltenen Flexibilität zwischen den benachbarten zahn- oder zinnenartigen Vorsprüngen, die gerade nicht durch die Fortsätze 26 miteinander verbunden sind, kann eine spannungsarme Verbindung mit dem stark schrumpfenden Vergußmaterial aus Polyoretan eingegangen werden.

Während des Herstellprozesses werden die Hohlfaserbündel 16 in das Gehäuse 12 eingeführt. Ein Heraustreten der einzelnen Hohlfasern aus dem Zwischenbereich zwischen den Vorsprüngen 22 kann durch die erfindungsgemäß vorgesehenen Fortsätze 26 sicher verhindert werden.

Die sichelförmige Gestaltung der Fortsätze 26 erlaubt darüber hinaus eine einfache und kostengünstige Ausführung des Spritzgußwerkzeuges, weil diese geometrische Form in axiale Richtung in einem Schritt zwangsentformbar ist. Insbesondere weil die Fortsätze 26 relativ flexibel sind und sich auch beim Entformen in Richtung des zahn- oder zinnenartigen Vorsprungs biegen können, können sie mit einem Spritzgußwerkzeug hergestellt werden, obwohl sie im Endzustand einen Hinterschnitt darstellen.

## Patentansprüche

1. Hohlfasermembrantrennvorrichtung (10) mit zwei Strömungsräumen, von denen ein erster Raum durch die Kapillarröhren-Durchgänge eines an seinen Enden in eine Vergußmasse eingegossenen Hohlfaserbündels (14) und ein zweiter Raum durch ein das Faserbündel (14) einfassendes Gehäuse (12) gebildet ist, wobei der erste Raum durch auf die Vergußmassen (16) aufgesetzte Kappen (18) abgedichtet ist und wobei das Gehäuse (12), in das das Hohlfaserbündel (14) eingezogen ist, an den jeweiligen Enden seines Mantels mit durch frei auslaufende, axiale Kerben oder Einschnitte gebildeten zahnoder zinnenartigen Vorsprüngen (22) versehen ist,
**dadurch gekennzeichnet,**
**daß** das Gehäuse (12) zwischen den zahn- oder zinnenartigen Vorsprüngen (22) von diesen ausgehende Fortsätze (26) aufweist, die sich zum benachbarten zahn- oder zinnenartigen Vorsprung (22) erstrecken.

2. Hohlfasermembrantrennvorrichtung (10) nach Anspruch 1, **dadurch gekennzeichnet, daß** die Fortsätze (26) als bogen- bzw. sichelförmige Haken ausgebildet sind.

3. Hohlfasermembrantrennvorrichtung (10) nach Anspruch 1 oder 2, **dadurch gekennzeichnet, daß** über die Höhe eines zahn- oder zinnenartigen Vorsprunges (22) sich von diesem ausgehend zu jeder Seite hin zwei Fortsätze (26) verzweigen.

4. Hohlfasermembrantrennvorrichtung (10) nach einem der Ansprüche 1 bis 3, **dadurch gekennzeichnet, dass** die von den zahn- oder zinnenartigen Vorsprüngen (22) ausgehenden Fortsätze nicht mit den benachbarten zahn- oder zinnenartigen Vorsprüngen (22) verbunden sind.

5. Hohlfasermembranvorrichtung (10) nach einem der Ansprüche 1 bis 3, **dadurch gekennzeichnet, dass** die von den zahn- und zinnenartigen Vorsprüngen (22) ausgehenden Fortsätze (26) mit den benachbarten zahn- oder zinnenartigen Vorsprüngen (22) verbunden sind.

6. Hohlfasermembrantrennvorrichtung (10) nach einem der Ansprüche 1 bis 5, **dadurch gekennzeichnet, daß** das Gehäuse (12) einstückig aus einem flexiblen Kunststoff spritzgegossen ist.

7. Gehäuse (12) einer Hohlfasermembrantrennvorrichtung (10) nach einem der Ansprüche 1 bis 6 mit zwischen seinen endseitig vorgesehenen zahn- oder zinnenartigen Vorsprüngen (22) von diesen jeweils ausgehenden Fortsätze (26), die sich jeweils zum benachbarten zahn- oder zinnenartigen Vorsprung (22) erstrecken.

## Claims

1. Hollow fiber membrane separation device (10) with two flow spaces, of which a first space is formed by the capillary tube passages of a hollow-fiber bundle (14) cast at its ends into a sealing compound, and a second space is formed by a housing (12) enclosing the fiber bundle (14), wherein the first space is sealed off by caps (18) placed on the sealing compounds (16), and wherein the housing (12), into which the hollow-fiber bundle (14) is drawn, at each end of its casing is provided with tooth-like or pinnacle-like projections (22) formed by axial notches or indentations running out freely,
**characterized in**
**that**, between the tooth-like or pinnacle-like projections (22), the housing (12) has extensions (26) extending from said projections and extending to the adjacent tooth-like or pinnacle-like projection (22).

2. Hollow fiber membrane separation device (10) according to claim 1, **characterized in that** the extensions (26) are formed as arch-shaped or sickleshaped hooks.

3. Hollow fiber membrane separation device (10) according to claim 1 or 2, **characterized in that** over the height of a tooth-like or pinnacle-like projection (22) and extending therefrom two extensions (26) branch towards each side.

4. Hollow fiber membrane separation device (10) according to anyone of claims 1 through 3, **characterized in that** the extensions extending from the tooth-like or pinnacle-like projections (22) are not connected to the adjacent tooth-like or pinnacle-like projections (22).

5. Hollow fiber membrane separation device (10) according to anyone of claims 1 through 3, **characterized in that** the extensions (26) extending from the tooth-like or pinnacle-like projections (22) are connected to the adjacent tooth-like or pinnacle-like projections (22).

6. Hollow fiber membrane separation device (10) according to anyone of claims 1 through 5, **characterized in that** the housing (12) is made in one piece by injection moulding of a flexible plastic material.

7. Housing (12) of a hollow fiber membrane separation device (10) according to anyone of claims 1 through 6, comprising, between its tooth-like or pinnacle-like projections (22) provided at its ends, extensions (26) respectively extending from said projections and each extending to the adjacent tooth-like or pinnacle-like projection (22).

## Revendications

1. Dispositif de séparation par membrane à fibres creuses (10) avec deux chambres d'écoulement, dont une première chambre est constituée par les passages de tubes capillaires d'un faisceau de fibres creuses (14) coulé à ses extrémités dans une masse de scellement et une deuxième chambre par un carter (12) entourant le faisceau de fibres (14), la première chambre étant étanchéifiée par des caches (18) mis en place sur les masses de scellement (16) et le carter (12) dans lequel est rentré le faisceau de fibres creuses (14) étant doté aux extrémités respectives de sa chemise, de proéminences (22) dentiformes ou crénelées se composant d'entailles ou d'incisions axiales se répandant librement,
**caractérisé en ce que**
entre les proéminences (22) dentiformes ou crénelées, le carter (12) présente des prolongements (26) partant de celles-ci, qui s'étendent vers la proéminence (22) dentiforme ou crénelée avoisinante.

2. Dispositif de séparation par membrane à fibres creuses (10) selon la revendication 1, **caractérisé en ce que** les prolongements (26) sont constitués en crochets arqués ou falciformes.

3. Dispositif de séparation par membrane à fibres creuses (10) selon la revendication 1 ou 2, **caractérisé en ce que** deux prolongements (26) se ramifient vers chaque côté par la hauteur d'une proéminence (22) dentiforme ou crénelée en partant de celle-ci.

4. Dispositif de séparation par membrane à fibres creuses (10) selon une quelconque des revendications 1 à 3, **caractérisé en ce que** les prolongements partant des proéminences (22) dentiformes ou crénelées ne sont pas reliés aux proéminences (22) dentiformes ou crénelées avoisinantes.

5. Dispositif de membrane à fibres creuses (10) selon une quelconque des revendications 1 à 3, **caractérisé en ce que** les prolongements (26) partant des proéminences (22) dentiformes ou crénelées sont reliés aux proéminences (22) dentiformes ou crénelées avoisinantes.

6. Dispositif de séparation par membrane à fibres creuses (10) selon une quelconque des revendications 1 à 5, **caractérisé en ce que** le carter (12) est moulé par injection en une seule pièce à partir d'un plastique flexible.

7. Carter (12) d'un dispositif de séparation par membrane à fibres creuses (10) selon une quelconque des revendications 1 à 6 avec, entre ses proéminences (22) dentiformes ou crénelées prévues aux extrémités, des prolongements (26) partant respectivement de celles-ci, qui s'étendent respectivement vers la proéminence (22) dentiforme ou crénelée avoisinante.
